(19) Europäisches Patentamt
European Patent Office
Office européen des brevets

(11) **EP 1 596 527 B1**

(12) **EUROPÄISCHE PATENTSCHRIFT**

(45) Veröffentlichungstag und Bekanntmachung des Hinweises auf die Patenterteilung:
**18.07.2007   Patentblatt 2007/29**

(51) Int Cl.:
***H04L 9/06*** *(2006.01)*

(21) Anmeldenummer: **05010532.9**

(22) Anmeldetag: **13.05.2005**

(54) **Übergang von einer booleschen Maskierung zu einer arithmetischen Maskierung**

Switching from boolean to arithmetic masking

Passage d'un masquage booléen à un masquage arithmétique

(84) Benannte Vertragsstaaten:
**AT BE BG CH CY CZ DE DK EE ES FI FR GB GR HU IE IS IT LI LT LU MC NL PL PT RO SE SI SK TR**

(30) Priorität: **13.05.2004   DE 102004023902**

(43) Veröffentlichungstag der Anmeldung:
**16.11.2005   Patentblatt 2005/46**

(73) Patentinhaber: **Giesecke & Devrient GmbH
81677 München (DE)**

(72) Erfinder: **Bauer, Sven, Dr.
81543 München (DE)**

(74) Vertreter: **Dendorfer, Claus et al
Dendorfer & Herrmann
Patentanwälte Partnerschaft
Bayerstrasse 3
80335 München (DE)**

(56) Entgegenhaltungen:
**WO-A-02/065692**

• **CORON J.-S.; TCHULKINE A.: "A New Algorithm for Switching from Arithmetic to Boolean Masking" CRYPTOGRAPHIC HARDWARE AND EMBEDDED SYSTEMS - CHES 2003; SPRINGER-VERLAG, 2003, Seiten 89-97, XP002340677 Berlin Heidelberg**
• **GOUBIN L ED - KOC C K ET AL: "A SOUND METHOD FOR SWITCHING BETWEEN BOOLEAN AND ARITHMETIC MASKING" CRYPTOGRAPHIC HARDWARE AND EMBEDDED SYSTEMS. 3RD INTERNATIONAL WORKSHOP, CHES 2001, PARIS, FRANCCE, MAY 14 - 16, 2001 PROCEEDINGS, LECTURE NOTES IN COMPUTER SCIENCE, BERLIN : SPRINGER, DE, Bd. VOL. 2162, 14. Mai 2001 (2001-05-14), Seiten 3-15, XP008002644 ISBN: 3-540-42521-7**

**Beschreibung**

Die Erfindung betrifft allgemein das Gebiet der Kryptographie und spezieller das Gebiet des Ausspähungsschutzes von kryptographischen Berechnungen. Insbesondere betrifft die Erfindung den Übergang von einer ersten Maskierung eines geheim zu haltenden Wertes, die auf einer booleschen Maskierungsregel beruht, zu einer zweiten Maskierung des geheim zu haltenden Wertes, die auf einer arithmetischen Maskierungsregel beruht. Besonders eignet sich die Erfindung zur Verwendung bei einem tragbaren Datenträger. Ein solcher tragbarer Datenträger kann z.B. eine Chipkarte *(smart card)* in unterschiedlichen Bauformen oder ein Chipmodul oder ein sonstiges ressourcenbeschränktes System sein.

Tragbare Datenträger werden oft für sicherheitskritische Anwendungen eingesetzt, beispielsweise zur Authentisierung im Mobilfunk, als GeldKarte, als Signaturkarte zur elektronischen Unterschrift und so weiter. Da durch eine unbefugte Verwendung hoher Schaden entstehen könnte, müssen die auf solchen Datenträgern gespeicherten, geheimen Daten zuverlässig vor Ausspähung und Manipulation geschützt werden.

Es sind diverse Angriffsverfahren zur Datenausspähung bekannt, die physikalische Eigenschaften des Datenträgers ausnutzen und daher als Hardwareangriffe bezeichnet werden. Insbesondere ist es bekannt, daß durch Messung der Stromaufnahme des Datenträgers während der Abarbeitung eines Programms unter Umständen Rückschlüsse auf die verarbeiteten Daten gezogen werden können. Angriffsverfahren, die auf solchen Messungen beruhen, sind als SPA-Angriffe (SPA = *Simple Power Analysis)* bzw. DPA-Angriffe (DPA = *Differential Power Analysis)* bekannt. Bei einem SPA-Angriff wird die Stromaufnahme während eines einzigen Berechnungsablaufs untersucht, während bei einem DPA-Angriff viele Berechnungsabläufe statistisch ausgewertet werden. Auch verwandte Angriffsverfahren, bei denen zusätzlich zum Stromverbrauch oder statt des Stromverbrauchs mindestens ein anderer physikalischer Parameter gemessen wird, sollen in der Wortwahl des vorliegenden Dokuments als SPA- bzw. DPA-Angriffe bezeichnet werden.

Um SPA- und DPA-Angriffe abzuwehren, muß dafür gesorgt werden, daß die Stromaufnahme des Datenträgers unabhängig von den verarbeiteten Daten ist. Hierzu ist eine softwaremäßige Schutzmaßnahme bekannt, die darin besteht, geheim zu haltende Daten vor der Ausführung von kryptographischen Berechnungen zu maskieren, also mit einem als Maske bezeichneten Wert zu verfälschen. Die kryptographische Berechnung wird dann nicht mit den geheim zu haltenden Daten, sondern mit deren maskierter Repräsentation durchgeführt. Selbst wenn es einem Angreifer gelingt, z.B. durch einen SPA- oder DPA-Angriff die maskierte Repräsentation zu ermitteln, so können daraus wegen der Maskierung keine Rückschlüsse auf die geheim zu haltenden Daten gezogen werden. Die Maske wird vor jeder Ausführung der kryptographischen Berechnung - oder auch zu anderen Zeitpunkten - als zufälliger Wert gewählt. Am Ende der kryptographischen Berechnung wird die Maskierung wieder rückgängig gemacht.

Eine Maskierung eines geheim zu haltenden Wertes kann auf unterschiedlichen Maskierungsregeln beruhen. Die Maskierungsregel gibt die Rechenvorschrift an, gemäß der die zu schützenden Daten mit der Maske verknüpft werden, um die maskierte Repräsentation der zu schützenden Daten zu erhalten. Welche Maskierungsregel geeignet ist, hängt von der Art der kryptographischen Berechnung ab.

Wenn die kryptographische Berechnung im wesentlichen aus bitweisen Operationen besteht, ist als Maskierungsregel oft eine Exklusiv-Oder-Verknüpfung (xor-Verknüpfung) geeignet. Aus einem geheim zu haltenden Wert d wird also eine maskierte Repräsentation $x$ mit $x = d$ xor $z_1$ abgeleitet, wobei $z_1$ die zufällig gewählte Maske ist. Eine solche Maskierungsregel und auch verwandte Maskierungsregeln, die z.B. zusätzliche Invertierungen einzelner Bits aufweisen, werden im vorliegenden Dokument als boolesche Maskierungsregeln bezeichnet.

Wenn die kryptographische Berechnung dagegen im wesentlichen aus byte- oder wortweisen Additionen oder vergleichbaren Operationen besteht, ist als Maskierungsregel oft eine Addition oder Subtraktion sinnvoll. Statt des geheim zu haltenden Wertes d wird also z.B. eine maskierte Repräsentation $x$ mit $x = d + z_2$ mod $2^n$ oder $x = d - z_2$ mod $2^n$ verarbeitet, wobei n die Wortlänge in Bit ist. Im vorliegenden Dokument werden diese additiven und subtraktiven Maskierungsregeln und auch verwandte Maskierungsregeln, bei denen z.B. die Argumente der Subtraktion vertauscht sind, als arithmetische Maskierungsregeln bezeichnet.

Ein Problem ergibt sich, wenn bei der kryptographischen Berechnung nacheinander Operationen ausgeführt werden, die nur mit unterschiedlichen Maskierungsregeln verträglich sind. Das ist beispielsweise bei symmetrischen Verschlüsselungsverfahren wie IDEA *(International Data Encryption Algorithm),* SAFER K-64 und RC5 sowie Hash-Algorithmen wie MD5 oder SHA-1 der Fall. Für manche Abschnitte dieser Algorithmen bietet sich eine Maskierung mit einer xor-Verknüpfung an, während in anderen Abschnitten eine arithmetische Maskierung mit einer Addition oder Subtraktion verwendet werden muß.

An den Schnittstellen zwischen diesen Abschnitten ist es daher erforderlich, einen Übergang von einer Art der Maskierung in die andere zu schaffen. Auch hierbei ist darauf zu achten, daß ein Angreifer keine verwertbaren Informationen über den zu schützenden Wert erhalten kann. Daher verbietet sich die Vorgehensweise, zunächst den Wert d aus der maskierten Repräsentation $x$ durch eine xor-Verknüpfung mit der Maske $z_1$ zu bestimmen und dann $d + z_2$ bzw. $d - z_2$ als neue maskierte Repräsentation zu berechnen.

In dem Artikel *"A Sound Method for Switching between Boolean and Arithmetic Masking"* von L. Goubin, erschienen in dem Tagungsband zum "Workshop on Cryptographic Hardware and Embedded Systems 2001 (CHES 2001)", Band 2162 der Lecture Notes in Computer Science, Springer-Verlag, 2001, Seiten 3 -15, sind ausspähungsgeschützte Verfahren zum Übergang zwischen einer xor-Verknüpfung als Maskierungsregel und einer additiven Maskierungsregel beschrieben. Diese Verfahren sind auch in WO 02/065692 A1 offenbart.

Bei dem von L. Goubin vorgeschlagenen Verfahren zum Übergang von einer xor-Verknüpfung als Maskierungsregel zu einer additiven Maskierungsregel wird bei unveränderter Maske eine neue maskierte Repräsentation berechnet. Diese Vorgehensweise ist jedoch nicht in jedem Fall vorteilhaft. So sind z.B. kryptographische Berechnungen vorstellbar, bei denen die maskierte Repräsentation nicht in einem einzigen Datenwort oder -feld, sondern in Form mehrerer Teile vorliegt. Es wäre aufwendig, diese Teile zunächst zusammenzusetzen, um die neue maskierte Repräsentation zu bestimmen, die dann wieder in die für den weiteren kryptographischen Berechnungsablauf benötigten Teile zerlegt werden müßte.

Die Erfindung hat demgemäß die Aufgabe, die oben genannten Probleme ganz oder zum Teil zu lösen und eine vorteilhafte Technik zum ausspähungsgeschützten Übergang von einer ersten Maskierung zu einer zweiten Maskierung eines geheim zu haltenden Wertes zu schaffen, wobei die erste Maskierung auf einer booleschen Maskierungsregel beruht und die zweite Maskierung auf einer arithmetischen Maskierungsregel beruht. In bevorzugten Ausgestaltungen soll sich diese Technik insbesondere zur Einbettung in kryptographische Berechnungen eignen, bei denen die Verfahren des Standes der Technik mit Nachteilen behaftet sind.

Erfindungsgemäß wird diese Aufgabe ganz oder zum Teil gelöst durch ein Verfahren mit den Merkmalen des Anspruchs 1, ein Computerprogrammprodukt gemäß Anspruch 10 und eine Vorrichtung, insbesondere einen tragbaren Datenträger, gemäß Anspruch 11. Die abhängigen Ansprüche betreffen bevorzugte Ausgestaltungen der Erfindung.

Die Erfindung geht von der Grundüberlegung aus, bei dem Maskierungsübergang die maskierte Repräsentation unverändert zu belassen und stattdessen die Maske zu verändern. Diese Vorgehensweise ist oft vorteilhaft, weil bei einer kryptographischen Berechnung, in die das erfindungsgemäße Verfahren eingebettet ist, in der Regel die maskierte Repräsentation verändert wird, während die Maske unverändert bleibt. Weil der erfindungsgemäße Maskierungsübergang also Daten betrifft, die für die kryptographische Berechnung in der Regel keine Rolle spielen, werden potentielle Konflikte zwischen der kryptographischen Berechnung und dem erfindungsgemäßen Maskierungsübergang vermieden.

In bevorzugten Ausgestaltungen ist vorgesehen, während des Berechnungsablaufs zum Ausspähungsschutz eine dritte Maske zu verwenden, die vorzugsweise zufällig und/ oder im zur Verfügung stehenden Wertebereich gleichverteilt bestimmt wird. Die dritte Maske wird vorzugsweise sowohl in mindestens einer booleschen Operation als auch in mindestens einer arithmetischen Operation verwendet.

Auf jeden Fall ist es eine Bedingung für den Ausspähungsschutz, daß der geheim zu haltende Wert zu keinem Zeitpunkt während des Berechnungsablaufs in unmaskierter Form vorliegt. Um dies zu gewährleisten, kann in manchen Ausgestaltungen vorgesehen sein, daß alle während des Berechnungsablaufs auftretenden Zwischenergebnisse mit zumindest einer Maske - der ursprünglichen, ersten Maske und/ oder der durch das Verfahren berechneten, zweiten Maske und/ oder der neu hinzugezogenen, dritten Maske - maskiert sind.

In einer besonders vorteilhaften Ausgestaltung der Erfindung wird die maskierte Repräsentation während des gesamten Berechnungsablaufs zum Maskierungswechsel nur ein einziges Mal herangezogen. Auf diese Weise werden Speicherzugriffe eingespart, die gerade bei den in tragbaren Datenträgern verwendeten Speichertechnologien erhebliche Zugriffszeit beanspruchen können.

Vorzugsweise ist das Maskierungsübergangsverfahren zwischen zwei Abschnitte einer kryptographischen Berechnung eingebettet. In der Reihenfolge der Programmausführung wird hierbei zunächst die maskierte Repräsentation durch eine mit der booleschen Maskierungsregel verträgliche Operation erzeugt oder verarbeitet, dann erfolgt der Maskierungsübergang, und schließlich wird die maskierte Repräsentation durch eine mit der arithmetischen Maskierungsregel verträgliche Operation weiterverarbeitet.

Das erfindungsgemäße Computerprogrammprodukt weist Programmbefehle auf, um das erfindungsgemäße Verfahren zu implementieren. Ein derartiges Computerprogrammprodukt kann ein körperliches Medium sein, z.B. ein Halbleiterspeicher oder eine Diskette oder eine CD-ROM. Das Computerprogrammprodukt kann jedoch auch ein nichtkörperliches Medium sein, z.B. ein über ein Computernetzwerk übermitteltes Signal. Insbesondere kann das Computerprogrammprodukt Programmbefehle enthalten, die im Zuge der Herstellung oder der Initialisierung oder der Personalisierung eines tragbaren Datenträgers in diesen eingebracht werden.

Die erfindungsgemäße Vorrichtung kann insbesondere ein tragbarer Datenträger, z.B. eine Chipkarte oder ein Chipmodul, sein. Ein derartiger Datenträger enthält in an sich bekannter Weise mindestens einen Prozessor, mehrere in unterschiedlichen Technologien ausgestaltete Speicher und diverse Hilfsbaugruppen wie z.B. Schnittstellenschaltungen, Zeitgeber und Verbindungselemente.

In bevorzugten Weiterbildungen weisen das Computerprogrammprodukt und/oder die Vorrichtung Merkmale auf, die den in der vorliegenden Beschreibung erwähnten und/ oder den in den abhängigen Verfahrensansprüchen genannten Merkmalen entsprechen.

Weitere Merkmale, Aufgaben und Vorteile der Erfindung ergeben sich aus der folgenden Beschreibung eines Ausführungsbeispiels und mehrerer Ausführungsalternativen. Es wird auf die schematische Zeichnung verwiesen.

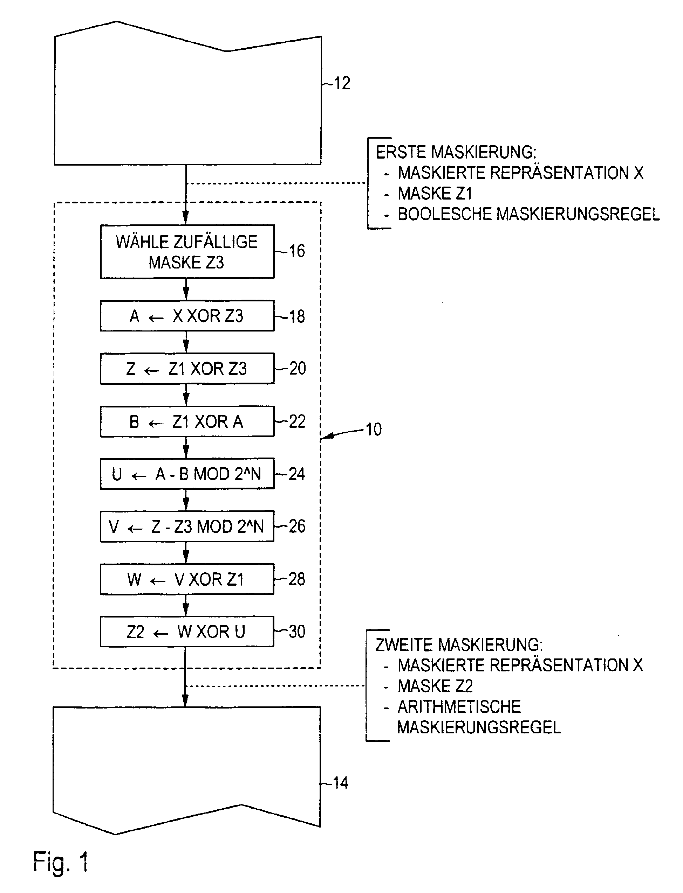

Fig. 1 als einzige Zeichnungsfigur zeigt ein Flußdiagramm eines Ausführungsbeispiels der Erfindung.

In Fig.1 ist ein Teil einer kryptographischen Berechnung, z.B. einer IDEA-Ver- oder Entschlüsselung, dargestellt. Ein Maskierungsübergangsverfahren 10 nach einem Ausführungsbeispiel der Erfindung ist zwischen einen ersten Abschnitt 12 und einen zweiten Abschnitt 14 der kryptographischen Berechnung eingebettet. Im ersten Abschnitt 12 wird eine maskierte Repräsentation $x$ eines geheim zu haltenden Wertes d verarbeitet, die gemäß einer booleschen Maskierungsregel, hier z.B. der Regel $x = d$ xor $z_1$, mit einer ersten Maske $z_1$ maskiert ist. Die im ersten Abschnitt 12 ausgeführten Rechenoperationen sind mit der booleschen Maskierungsregel verträglich. Durch die Rechenoperationen wird die maskierte Repräsentation x während der Ausführung des ersten Abschnitts 12 verändert, während die Maske $z_1$ unverändert bleibt. Am Ende des ersten Abschnitts 12 liegt eine erste Maskierung in Form der maskierten Repräsentation $x$ und der ersten Maske $z_1$ vor.

Der zweite Abschnitt 14 der kryptographischen Berechnung beinhaltet weitere Rechenoperationen, die mit der maskierten Repräsentation $x$ ausgeführt werden. Diese Rechenoperationen sind jedoch nicht mit der booleschen Maskierungsregel, sondern nur mit einer arithmetischen Maskierungsregel verträglich. Im vorliegenden Ausführungsbeispiel lautet die im zweiten Abschnitt 14 verwendete Maskierungsregel $x = d - z_2 \bmod 2^n$, wobei $z_2$ eine zweite Maske ist und $n$ die Wortlänge der Berechnung in Bit angibt. Das Maskierungsübergangsverfahren 10 soll daher aus der ersten Maskierung des geheimen Wertes $d$ eine zweite Maskierung bestimmen, die aus einer gegenüber der ersten Maskierung unveränderten maskierten Repräsentation $x$ und einer neuen zweiten Maske $z_2$ besteht. Bei der Ausführung des zweiten Abschnitts 14 wird dann die maskierte Repräsentation $x$ der zweiten Maskierung weiterverarbeitet, während die zweite Maske $z_2$ unverändert bleibt.

In Formelschreibweise soll das Maskierungsübergangsverfahren 10 zu der maskierten Repräsentation $x$ und der ersten Maske $z_1$, wobei $x = d$ xor $z_1$ gilt, die zweite Maske $z_2$ so berechnen, daß $x = d - z_2 \bmod 2^n$ gilt. Der Maskenübergang soll ausspähungsgeschützt erfolgten; es dürfen also selbst bei Kenntnis der Zwischenergebnisse keine Informationen über den geheim zu haltenden Wert d ableitbar sein.

Im vorliegend beschriebenen Ausführungsbeispiel beginnt das Maskierungsübergangsverfahren 10 in Schritt 16 mit der zufälligen Auswahl einer dritten Maske $z_3$ gemäß einer gleichmäßigen statistischen Verteilung. Dann werden in den Schritten 18 - 30 die folgenden Zuweisungen ausgeführt, die hier der besseren Übersichtlichkeit halber mit jeweils unterschiedlichen Variablennamen auf der linken Seite dargestellt sind. Es versteht sich, daß in einer Implementierung des Verfahrens die für die Zwischenergebnisse benötigten Speicherbereiche möglichst weitgehend wiederverwendet werden:

$$A \leftarrow x \text{ xor } z_3 \qquad\qquad (\text{Schritt } 18)$$

$$Z \leftarrow z_1 \text{ xor } z_3 \qquad\qquad (\text{Schritt } 20)$$

$$B \leftarrow z_1 \text{ xor } A \qquad\qquad (\text{Schritt } 22)$$

$$U \leftarrow A - B \bmod 2^n \qquad\qquad (\text{Schritt } 24)$$

$$V \leftarrow Z - z_3 \bmod 2^n \qquad\qquad (\text{Schritt } 26)$$

$$W \leftarrow V \text{ xor } z_1 \qquad\qquad (\text{Schritt } 28)$$

$$z_2 \leftarrow W \text{ xor } U \qquad\qquad (\text{Schritt } 30)$$

Wegen der gleichverteilten Zufallsauswahl der dritten Maske $z_3$ bei jeder Ausführung des Maskierungsübergangsverfahrens 10 sind auch die Zwischenergebnisse $A$ und $Z$ gleichverteilt. Dies gilt wegen $B = d$ xor $z_3$ auch für das

Zwischenergebnis $B$. Unter der Voraussetzung, daß auch die erste Maske $z_1$ bei jeder Ausführung der kryptographischen Berechnung erneut zufällig und gleichverteilt gewählt wird, sind auch die Werte des Zwischenergebnisses $U$ bei wiederholtem Verfahrensablauf gleichverteilt, weil $A$ mit $z_1$ gleichmäßig variiert. Eine entsprechende Argumentation trifft hinsichtlich des Zwischenergebnisses $V$ zu. Das Zwischenergebnis $W$ enthält keine Informationen über den geheim zu haltenden Wert $d$. Schließlich ist unter der oben genannten Voraussetzung auch die als Endergebnis berechnete zweite Maske $z_2$ über den zur Verfügung stehenden Wertebereich $0, 1, \ldots 2^{n-1}$, gleichverteilt, da jeder Wert von $z_2$ genau einem Wert von $z_1$ entspricht.

Insgesamt folgt aus den obigen Überlegungen, daß auch eine Statistik über mehrere bei der Abarbeitung des Maskierungsübergangsverfahrens 10 aufgenommene Stromkurven keine Informationen über den geheim zu haltenden Wert $d$ enthalten kann, sofern $z_1$ und $z_3$ zufällig und gleichverteilt gewählt werden. In diesem Fall sind nämlich alle Zwischenergebnisse, die von d abhängen, gleichmäßig zufällig verteilt. Der Berechnungsablauf ist damit nicht nur gegen SPA-Angriffe, sondern auch gegen DPA-Angriffe geschützt.

Die Korrektheit des Maskierungsübergangsverfahrens 10 im hier beschriebenen Ausführungsbeispiel ergibt sich aus einer Betrachtung der Funktion $F : \mathrm{GF}(2)^n \times \mathrm{GF}(2)^n \rightarrow \mathrm{GF}(2)^n$ mit $F(x, z) = ((x \text{ xor } z) - x) \bmod 2^n$. Hierbei wird die Differenz im Ring $\mathbb{Z}/2^n$ gebildet, dessen Elemente über ihre Binärdarstellung auch mit den Elementen des Vektorraums $\mathrm{GF}(2)^n$ identifiziert werden. In diesem Zusammenhang ist anzumerken, daß die xor-Verknüpfung der booleschen Maskierungsregel die Addition im endlichen, $2^n$-elementigen Körper $\mathrm{GF}(2^n)$ oder im $\mathrm{GF}(2)$-Vektorraum $\mathrm{GF}(2)^n$ ist, während die Subtraktion der arithmetischen Maskierungsregel die Subtraktion im Ring $\mathbb{Z}/2^n$ ist.

Für $x, z_1 \in \mathrm{GF}(2)^n$ und $z_2 := F(x, z_1)$ gilt $x \text{ xor } z_1 = (x + z_2) \bmod 2^n = d$ nach der Definition von $F$ und der verwendeten subtraktiven Maskierungsregel. Mit anderen Worten liefert die Funktion $F$ zu einer maskierten Repräsentation $x$, die bezüglich einer booleschen Maskierungsregel mit einer ersten Maske $z_1$ bestimmt ist, eine äquivalente zweite Maske $z_2$, die zur Verwendung mit einer subtraktiven Maskierungsregel bestimmt ist. Es läßt sich zeigen, daß die Funktion $F$ affin im ersten Argument ist. Mit anderen Worten ist die Abbildung $F(\_, z)$ für beliebiges, festes $z$ affin über $\mathrm{GF}(2)$, also mit der xor-Operation verträglich. Daraus folgt für jedes $z_3 \in \mathrm{GF}(2)^n$ die Gleichungskette:

$$
\begin{aligned}
z_2 &= F(x, z_1) \\
&= F(x \text{ xor } z_3 \text{ xor } z_3 \text{ xor } 0, z_1) \\
&= F(x \text{ xor } z_3, z_1) \text{ xor } F(z_3, z_1) \text{ xor } F(0, z_1) \\
&= ((x \text{ xor } z_3) \text{ xor } z_1) - (x \text{ xor } z_3)) \text{ xor } ((z_3 \text{ xor } z_1) - z_3) \text{ xor } z_1
\end{aligned}
$$

Aus der letzten Gleichung der obigen Kette ergeben sich die Schritte 18 - 30 des Maskierungsübergangsverfahrens 10 gemäß dem hier beschriebenen Ausführungsbeispiel. In Ausführungsalternativen können die vorgenommenen Berechnungen gemäß den gerade erläuterten Grundideen an unterschiedliche Maskierungsregeln angepaßt werden. So sind z.B. für eine subtraktive Maskierungsregel der Form $x = z_2 - d \bmod 2^n$ die Subtraktionen in den Schritten 24 und 26 durch Additionen zu ersetzen. Für eine additive Maskierungsregel der Form $x = d + z_2 \bmod 2^n$ werden in einer weiteren Ausführungsalternative die einzelnen Verfahrensschritte gemäß der obigen Darstellung unter Verwendung einer Funktion $F'(x, z) = (x - (x \text{ xor } z)) \bmod 2^n$ bestimmt, wodurch sich die folgende Beziehung ergibt:

$$
z_2 = (((x \text{ xor } z_3) - ((x \text{ xor } z_3) \text{ xor } z_1)) \text{ xor } (z_3 - (z_3 \text{ xor } z_1)) \text{ xor } -z_1
$$

Das Verfahren gemäß Fig.1 und die genannten Ausführungsalternativen sind dazu vorgesehen, von einem Prozessor eines tragbaren Datenträgers, insbesondere einer Chipkarte oder eines Chipmoduls, ausgeführt zu werden. Die Verfahren sind dazu in Form von Programmbefehlen implementiert, die in einem ROM oder einem EEPROM oder einem sonstigen Speicher des Datenträgers enthalten sind.

**Patentansprüche**

1. Verfahren zum ausspähungsgeschützten Übergang von einer ersten Maskierung eines geheim zu haltenden Wertes $d$ zu einer zweiten Maskierung des geheim zu haltenden Wertes $d$, wobei der geheim zu haltende Wert $d$ in der ersten Maskierung als eine gemäß einer booleschen Maskierungsregel mit einer ersten Maske $z_1$ maskierte Re-

präsentation $x$ vorliegt, und wobei die zweite Maskierung auf einer arithmetischen Maskierungsregel beruht, **dadurch gekennzeichnet, daß** eine zweite Maske $z_2$ derart berechnet wird, daß die maskierte Repräsentation $x$ den geheim zu haltenden Wert $d$ gemäß der arithmetischen Maskierungsregel mit der zweiten Maske $z_2$ angibt.

2. Verfahren nach Anspruch 1, **dadurch gekennzeichnet, daß** während des Berechnungsablaufs zum Schutz vor einer Ausspähung des geheim zu haltenden Wertes $d$ eine dritte Maske $z_3$ herangezogen wird.

3. Verfahren nach Anspruch 2, **dadurch gekennzeichnet, daß** alle Zwischenergebnisse $A, Z, B, U, V, W$ während des Berechnungsablaufs von zumindest einer der ersten, zweiten und dritten Maske $z_1, z_2, z_3$ abhängen.

4. Verfahren nach Anspruch 2 oder Anspruch 3, **dadurch gekennzeichnet, daß** die dritte Maske $z_3$ zufällig bestimmt wird.

5. Verfahren nach einem der Ansprüche 2 bis 4, **dadurch gekennzeichnet, daß** die dritte Maske ($z_3$) sowohl in mindestens einer booleschen Operation als auch in mindestens einer arithmetischen Operation in den Berechnungsablauf eingeht.

6. Verfahren nach einem der Ansprüche 2 bis 5, **dadurch gekennzeichnet, daß** die zweite Maske $z_2$ durch Auswerten einer Beziehung der Form

$$z_2 = \pm (\ (\pm((x \text{ xor } z_3) \text{ xor } z_1) \pm (x \text{ xor } z_3))\ \text{ xor }$$
$$(\pm((z_3 \text{ xor } z_1) \pm z_3))\ \text{ xor }$$
$$(\pm z_1)\ )$$

berechnet wird.

7. Verfahren nach einem der Ansprüche 1 bis 6, **dadurch gekennzeichnet, daß** die maskierte Repräsentation $x$ während des Berechnungsablaufs nur ein einziges Mal herangezogen wird.

8. Verfahren nach einem der Ansprüche 1 bis 7, **dadurch gekennzeichnet, daß** das Verfahren zwischen zwei Abschnitte (12,14) einer kryptographischen Berechnung eingebettet ist, wobei im ersten Abschnitt (12) die maskierte Repräsentation $x$ durch mindestens eine Operation erzeugt oder verarbeitet wird, die mit der booleschen Maskierungsregel verträglich ist, und im zweiten Abschnitt (14) die maskierte Repräsentation $x$ durch mindestens eine Operation weiterverarbeitet wird, die mit der arithmetischen Maskierungsregel verträglich ist.

9. Verfahren nach einem der Ansprüche 1 bis 8, **dadurch gekennzeichnet, daß** das Verfahren zum Schutz gegen SPA- und/oder DPA-Angriffe dient.

10. Computerprogrammprodukt mit einer Vielzahl von Programmbefehlen, die mindestens einen Prozessor dazu veranlassen, ein Verfahren nach einem der Ansprüche 1 bis 9 auszuführen.

11. Vorrichtung, insbesondere tragbarer Datenträger, mit mindestens einem Prozessor und mindestens einem Speicher, wobei die Vorrichtung dazu eingerichtet ist, ein Verfahren nach einem der Ansprüche 1 bis 9 auszuführen.

**Claims**

1. A method for transitioning, in a way that is protected against spying, from a first masking of a value $d$ to be kept secret to a second masking of the value $d$ to be kept secret, wherein the value $d$ to be kept secret is given in the first masking as a masked representation $x$ according to a Boolean masking rule with a first mask $z_1$, and wherein the second masking is based on an arithmetic masking rule, **characterised in that** a second mask $z_2$ is calculated in a way that the masked representation $x$ denotes the value $d$ to be kept secret according to the arithmetic masking rule with the second mask $z_2$.

**2.** The method according to claim 1, **characterised in that** a third mask $z_3$ is used during the calculation in order to protect the value $d$ to be kept secret against spying.

**3.** The method according to claim 2, **characterised in that** all intermediate results $A, Z, B, U, V, W$ during the calculation depend on at least one of the first, second and third masks $z_1, z_2, z_3$.

**4.** The method according to claim 2 or claim 3, **characterised in that** the third mask $z_3$ is randomly determined.

**5.** The method according to any one of claims 2 to 4, **characterised in that** the third mask $z_3$ enters into the calculation both in at least one Boolean operation and in at least one arithmetic operation.

**6.** The method according to any one of claims 2 to 5, **characterised in that** the second mask $z_2$ is determined by evaluating a correspondence of the form

$$z_2 = \pm \left( \ \left(\pm((x \ \text{xor} \ z_3) \ \text{xor} \ z_1) \pm (x \ \text{xor} \ z_3)\right) \ \text{xor} \right.$$
$$\left(\pm((z_3 \ \text{xor} \ z_1) \pm z_3)\right) \ \text{xor}$$
$$\left. \left(\pm z_1\right) \ \right).$$

**7.** The method according to any one of claims 1 to 6, **characterised in that** the masked representation $x$ is used during the calculation only once.

**8.** The method according to any one of claims 1 to 7, **characterised in that** the method is embedded between two sections (12,14) of a cryptographic calculation, wherein, in the first section (12), the masked representation $x$ is generated or processed by at least one operation that is compatible with the Boolean masking rule, and, in the second section (14), the masked representation $x$ is further processed by at least one operation that is compatible with the arithmetic masking rule.

**9.** The method according to any one of claims 1 to 8, **characterised in that** the method serves for protection against SPA and/or DPA attacks.

**10.** A computer program product having a plurality of program instructions that cause at least one processor to perform a method according to any one of claims 1 to 9.

**11.** An apparatus, in particular a portable data carrier, having at least a processor and at least a memory, wherein the apparatus is adapted to perform a method according to any one of claims 1 to 9.

**Revendications**

**1.** Procédé pour le transfert protégé contre l'espionnage d'un premier masquage d'une valeur d à garder secrète à un second masquage de la valeur d à garder secrète, la valeur d à garder secrète étant présente dans le premier masquage sous la forme d'une représentation x masquée avec un premier masque $z_1$ selon une règle de masquage booléenne, et le second masquage reposant sur une règle de masquage arithmétique, **caractérisé en ce qu'**un second masque $z_2$ est calculé de telle sorte que la représentation x masquée indique la valeur d à garder secrète selon la règle de masquage arithmétique avec le second masque $z_2$.

**2.** Procédé selon la revendication 1, **caractérisé en ce qu'**un troisième masque $z_3$ est utilisé pendant l'opération de calcul pour la protection vis-à-vis d'un espionnage de la valeur d à garder secrète.

**3.** Procédé selon la revendication 2, **caractérisé en ce que** tous les résultats intermédiaires A, Z, B, U, V, W dépendent pendant l'opération de calcul d'au moins l'un des premier, second et troisième masques $z_1, z_2, z_3$.

**4.** Procédé selon la revendication 2 ou la revendication 3, **caractérisé en ce que** le troisième masque $z_3$ est déterminé

de façon aléatoire.

**5.** Procédé selon l'une quelconque des revendications 2 à 4, **caractérisé en ce que** le troisième masque $z_3$ est intégré dans l'opération de calcul aussi bien dans au moins une opération booléenne que dans au moins une opération arithmétique.

**6.** Procédé selon l'une quelconque des revendications 2 à 5, **caractérisé en ce que** le second masque $z_2$ est calculé par l'analyse d'une relation de la forme suivante

$$z_2 = \pm ( (\pm((x \text{ xor } z_3) \text{ xor } z_1) \pm (x \text{ xor } z_3)) \text{ xor}$$
$$(\pm((z_3 \text{ xor } z_1) \pm z_3)) \text{ xor}$$
$$(\pm z_1) )$$

**7.** Procédé selon l'une quelconque des revendications 1 à 6, **caractérisé en ce que** la représentation x masquée n'est utilisée qu'une seule fois pendant l'opération de calcul.

**8.** Procédé selon l'une quelconque des revendications 1 à 7, **caractérisé en ce que** le procédé est intégré entre deux parties (12, 14) d'un calcul cryptographique, la représentation x masquée étant générée ou traitée pendant la première partie (12) par au moins une opération, qui est compatible avec la règle de masquage booléenne, et la représentation x masquée étant traitée ultérieurement lors de la deuxième partie (14) par au moins une opération, qui est compatible avec la règle de masquage arithmétique.

**9.** Procédé selon l'une quelconque des revendications 1 à 8, **caractérisé en ce que** le procédé sert à la protection contre les attaques SPA et/ou les attaques DPA.

**10.** Produit de programme informatique avec une pluralité d'instructions de programme, qui ordonnent au moins à un processeur d'exécuter un procédé selon l'une quelconque des revendications 1 à 9.

**11.** Dispositif, en particulier support de données portable, comprenant au moins un processeur et au moins une mémoire, le dispositif étant aménagé pour exécuter un procédé selon l'une quelconque des revendications 1 à 9.

ERSTE MASKIERUNG:
- MASKIERTE REPRÄSENTATION X
- MASKE Z1
- BOOLESCHE MASKIERUNGSREGEL

WÄHLE ZUFÄLLIGE MASKE Z3 — 16

$A \leftarrow X \text{ XOR } Z3$ — 18

$Z \leftarrow Z1 \text{ XOR } Z3$ — 20

$B \leftarrow Z1 \text{ XOR } A$ — 22

$U \leftarrow A - B \text{ MOD } 2^N$ — 24

$V \leftarrow Z - Z3 \text{ MOD } 2^N$ — 26

$W \leftarrow V \text{ XOR } Z1$ — 28

$Z2 \leftarrow W \text{ XOR } U$ — 30

ZWEITE MASKIERUNG:
- MASKIERTE REPRÄSENTATION X
- MASKE Z2
- ARITHMETISCHE MASKIERUNGSREGEL

Fig. 1

9

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 02065692 A1

**In der Beschreibung aufgeführte Nicht-Patentliteratur**

- ''Workshop on Cryptographic Hardware and Embedded Systems 2001 (CHES 2001)'',. **L. GOUBIN.** Lecture Notes in Computer Science,. Springer-Verlag, 2001, vol. 2162, 3-15